# EUROPEAN PATENT SPECIFICATION

(11) **EP 1 264 940 B1**
(45) Date of publication and mention of the grant of the patent: **02.06.2004**
(21) Application number: 02076990.7
(22) Date of filing: 21.05.2002
(51) Int. Cl.: E02F 9/20, B60N 2/46

(54) **Bi-directional earth-moving machine having a special control lever arrangement**
Baggerlader mit spezieller Anordnung der Bedienhebel
Pelle chargeuse avec un arrangement special des manettes de commande

(30) Priority: 08.06.2001 IT BO20010366
(43) Date of publication of application: 11.12.2002
(73) Proprietor: CNH Italia S.p.A., 41100 Modena (IT)
(72) Inventor: Burgo, Giuseppe, 40026 Imola (IT)
(74) Representative: Vandenbroucke, Alberic

(56) References cited:
- EP-A- 0 882 643
- FR-A- 2 544 973
- GB-A- 2 351 796
- US-A- 5 086 869

## Description

The present invention relates to an earthmoving machine, more specifically referred to as a tractor loader backhoe (TLB). Traditionally, such vehicle comprises a supporting chassis having a given longitudinal axis, provided at the front with a larger loader mechanism and at the rear with a foldable backhoe arm structure having a shovel or bucket of smaller dimensions at its free end.

A driving seat is provided in a cab, mounted onto the chassis. Electronic or hydraulic manipulator devices are also provided in the cab to control the operation of the two loading devices. Since the two loading devices are positioned on opposite sides of the seat along the said longitudinal axis, the seat is traditionally fitted pivotally on the supporting chassis so as to rotate between a first operating position in which an operator can control the operation of the first of the said loading devices and a second operating position in which the operator can control the operation of the second of the said loading devices.

The manipulator devices used in known earth-moving machines of the kind described above are generally one of two types.

The first type of manipulator device comprises three manipulators fitted to the supporting chassis inside the cab and positioned in such a way that only one of the manipulators can be activated by the operator when the seat is in its first operating position to control the first loading device, and the other two can be activated by the operator when the seat is in its second operating position to control the second loading device.

Such an arrangement is shown for instance in GB-A-2 351 796.

This first type of manipulator device is relatively expensive because of the presence of three manipulators, and presents the further drawback that during rotation of the seat between the two operating positions, the operator can fairly easily knock against the manipulators, which are fitted to the supporting chassis and do not rotate with the seat. As a result, the manipulator device is even more complex and expensive because the manipulators must be coupled slidingly to the supporting chassis so that they can be moved away from and towards the seat, thus preventing them from being accidentally knocked when the seat rotates between its operating positions.

These drawbacks are partly solved by a manipulator device of the second of the two known types mentioned above, which comprises two manipulators fitted to the seat on the operator's right-hand side and left-hand side respectively. The first of these two manipulators operates the first loading device, and is combined in its operation with the second manipulator to operate the second loading device. Such an arrangement is shown for instance in FR-A-2 544 973.

This second type of manipulator device presents the drawback that when the operator activates the first loading device, and during rotation of the seat between its two operating positions, the second manipulator can fairly easily be knocked, causing unwanted movements of the second loading device. This accidental operation of the second loading device can be prevented by a safety device such that the second manipulator is only operational when the seat is in its second operating position. However, this makes the manipulator device again relatively complex and expensive.

Moreover, to allow the operator free access to the seat, the second manipulator is usually fitted pivotally to the seat so that it can rotate to and from a rest position in relation to the seat. In the rest position, the second manipulator is positioned in such a way as not to obstruct the operator's access to and from the seat. This makes the said manipulator device even more complex and expensive.

It is therefore an object of the present invention to provide an earth-moving machine which does not present the drawbacks described above.

According to the present invention, an earth-moving machine is provided having a longitudinal axis and comprising :
- a driving seat for an operator;
- support means for said seat;
- two loading devices positioned on opposite sides of the said seat along the said longitudinal axis;
- a first manipulator which enables the operator to activate the first of the said loading devices; and
- a second manipulator which, in combination with the first manipulator, enables the operator to activate the second of the said loading devices; said seat being coupled pivotally to said supporting means so that it can rotate between a first operating position in which the operator can activate said first loading device and a second operating position in which the operator can activate said second loading device.

The machine is further characterised in that said first manipulator is connected to said seat and said second manipulator is mounted onto said support means.

A non-limiting embodiment of the present invention will now be described by way of example with reference to the accompanying drawings, in which:
Figure 1 is a schematic side view of a preferred embodiment of the earth-moving machine to which this invention relates;
Figures 2 and 3 are schematic perspective views of a detail of the machine shown in figure 1, illustrated in different operating positions; and
Figures 4 and 5 are schematic perspective views of a further embodiment of the detail shown in figures 2 and 3, illustrated in different operating positions.

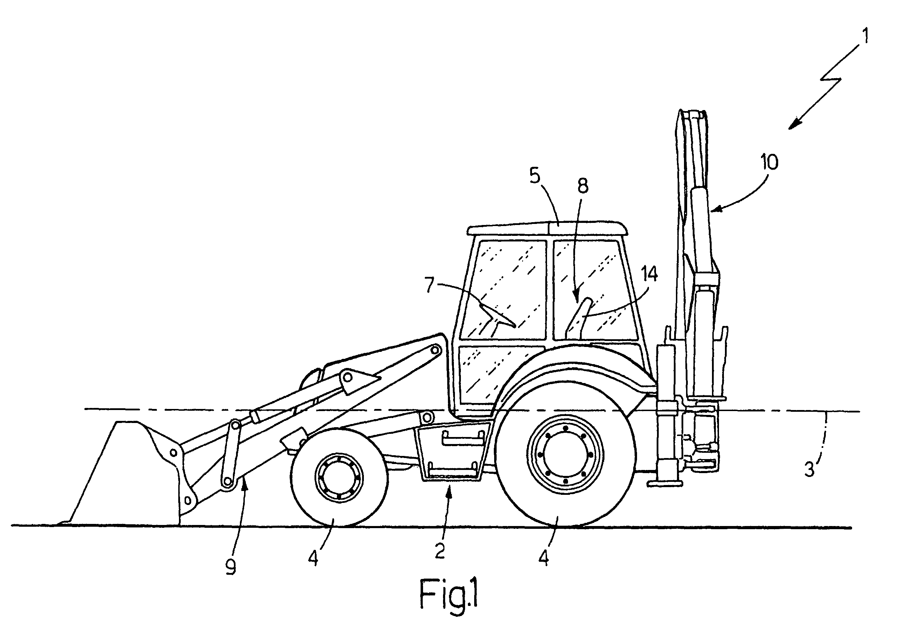

In figures 1, 2 and 3, reference number 1 indicates as a whole an earth-moving vehicle comprising a chassis 2 which presents a longitudinal axis 3 and is supported by two axles of known type not illustrated, which extend transversely to axis 3 and are each fitted with a pair of wheels 4, of which two at least are driven.

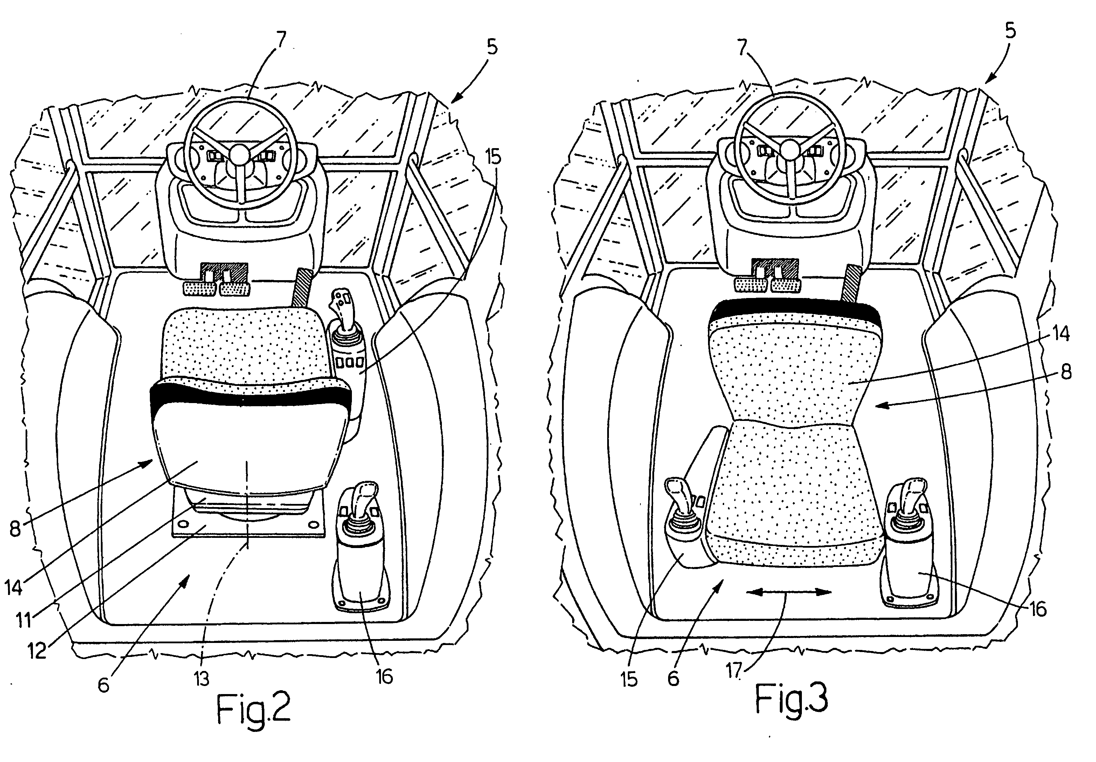

Chassis 2 supports a cab 5 which has a floor member 6 (figures 2 and 3) and is provided with a steering wheel 7 and a seat 8 for the operator of machine 1. Machine 1 is further provided with two loading devices 9, 10 of known type positioned on opposite sides of cab 5 along axis 3. The loading shovel 10 is situated on the front of vehicle 1 (i.e. on the opposite side of seat 8 relative to the steering wheel 7) while backhoe 9 is provided on the rear of the vehicle 1 (i.e. on the opposite side of steering wheel 7 relative to seat 8).

Seat 8 comprises a lower portion 11 which is fitted pivotally on a base plate 12 secured to floor member 6 in a manner such that seat 8 can rotate in relation to floor member 6 around a substantially vertical axis 13 transverse to axis 3, between a first operating position (figure 2) in which the operator faces steering wheel 7 and loader device 9 and a second operating position (figure 3), substantially rotated through 180° from the previous position, in which the operator faces rearwardly towards the backhoe device 10.

Seat 8 also includes an upper portion comprising a chair 14 which is coupled in a known manner to portion 11 so that it can perform straight movements parallel to axis 3 in relation to portion 11 in order to change the distance between the steering wheel 7 and the seat 8, when the seat 8 is in its first operating position or between the seat 8 and the rear of the cab 5, when the seat is in its second operating position.

The two loading devices 9, 10 are activated by the operator when seat 8 is positioned in its first and second operating positions respectively by means of two known electronic or hydraulic manipulators 15, 16. Manipulator 15 normally activates the front loading device 9, but is also operable, in combined operation with manipulator 16, to activate the rear loader 10. Manipulator 15 is secured to the pivotal part of seat 8 in such a way that it can be gripped by the operator's right hand. Manipulator 16 on the other hand extends towards the floor member 6 and is connected thereto so that when seat 8 is positioned in its second operating position the two manipulators 15 and 16 are positioned on opposite sides of seat 8 in a direction 17, as seen in Figure 3, substantially orthogonal to axes 3 and 13, and manipulator 16 can be gripped by the operator's left hand.

It follows from the above description that manipulator 15 participates in the rotation of seat 8 around axis 13 and can be used by the operator when seat 8 is in either its first or its second operating position, while manipulator 16 is secured to floor member 6 and can only be used when seat 8 is in its second operating position.

The position of manipulator 16 thus prevents accidental operation of manipulator 16 when seat 8 is in the first operating position and while the operator activates manipulator 15 and steering wheel 7. Also when seat 8 is rotated between its two operating positions, there is no danger of inadvertently knocking against manipulator 16. Furthermore, the described arrangement provides a relatively easy access of the operator to seat 8 when seat 8 is in its first operating position, the more that an operator normally enters the cab 5 from the left hand side.

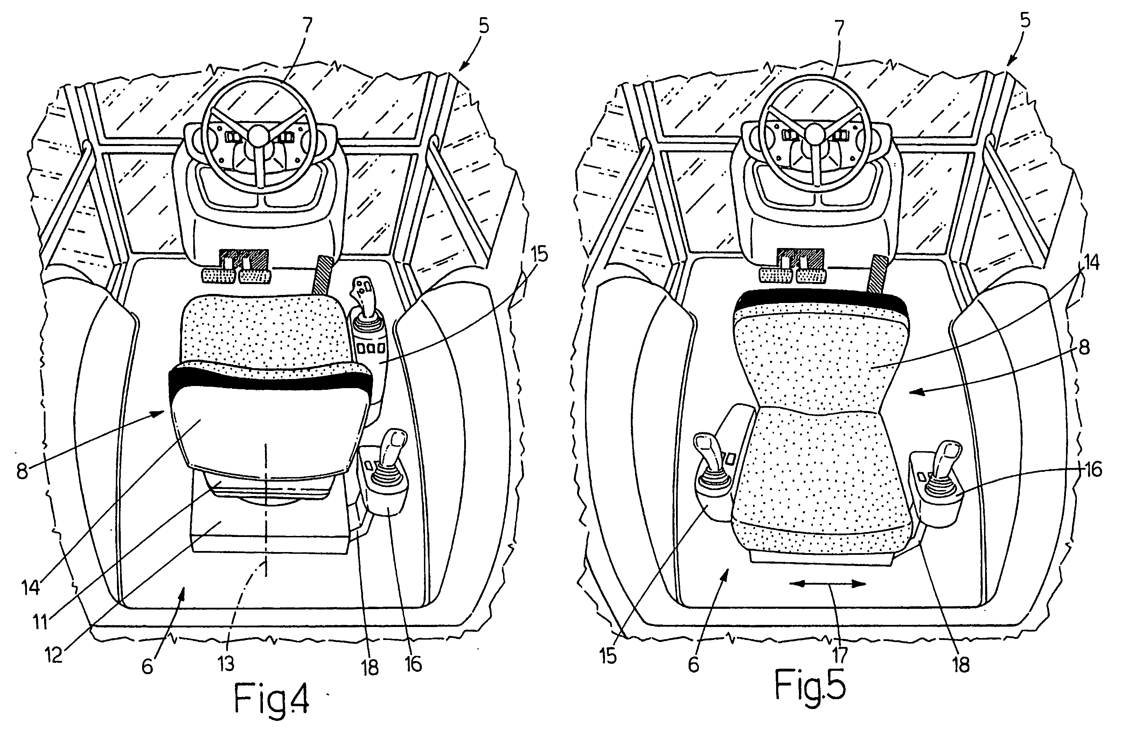

The version illustrated in Figures 4 and 5 differs from the one illustrated in Figures 2 and 3 solely in the way the manipulator 16 is provided inside the cab 5. In Figures 4 and 5, manipulator 16 is secured to base plate 12 through the interposition of a supporting bracket 18 which extends upwards from base 12. This embodiment presents the further advantage that manipulator 16 is directly secured to base 12, thus eliminating the need for conversions of cab 5, and in particular floor member 6. As such, the complete seat 8 with its two manipulators 15, 16 can be presented as a unit.

Although not shown in the drawings, the left hand side of the seat 8 may be provided with an armrest comparable to the one on the right hand side, except that no manipulator would be mounted on the front end thereof. This armrest could be made pivotable in order to facilitate accessibility of the seat 8. It also should stop short before the front end of the seat 8 to accommodate the second manipulator 16 when the seat 8 is in its second operating position, facing rearwardly. Due to the possibility of fore-and-aft adjustment of the seat 8, if required in combination with a longitudinal adjustment of manipulator 15, the operator can ensure that both manipulators 15, 16 are provided at the same arm length with seat 8 in its second operating position.

## Claims

1. An earth-moving machine having a longitudinal axis (3) and comprising :
- a driving seat (8) for an operator;
- support means (6, 12) for said seat (8);
- two loading devices (9, 10) positioned on opposite sides of the said seat (8) along the said longitudinal axis (3);
- a first manipulator (15) which enables the operator to activate the first (9) of the said loading devices (9, 10); and
- a second manipulator (16) which, in combination with the first manipulator (15), enables the operator to activate the second (10) of the said loading devices (9, 10); said seat (8) being coupled pivotally to said supporting means (6, 12) so that it can rotate between a first operating position in which the operator can activate said first loading device (9) and a second operating position in which the operator can activate said second loading device (10); and
**characterised in that** said first manipulator (15) is connected to said seat (8) and said second manipulator (16) is mounted onto said support means (6, 12).

2. A machine according to claim 1, **characterized in that**, when said seat (8) is in said second operating position, said first and second manipulators (15, 16) are positioned on opposite sides of the seat (8) in a direction (17) substantially transverse to the said longitudinal axis (3).

3. A machine according to claim 1 or 2, **characterized in that** said support means (6, 12) comprise a floor member (6) and a supporting element (12) for said seat (8) which is installed on the floor member (6), said second manipulator (16) being attached to said floor member (6).

4. A machine according to claim 1 or 2, **characterized in that** said support means (6, 12) comprise a floor member (6) and a supporting element (12) for said seat (8) which is installed on the said floor member (6), said second manipulator (16) being attached to said supporting element (12).

5. A machine according to any of the preceding claims, **characterized in that** said first and second manipulators (15, 16) are electronic manipulators.

6. A machine according to any of the preceding claims, **characterized in that** said first and second manipulators (15, 16) are hydraulic manipulators.

7. A machine according to any of the preceding claims, **characterized in that**, in the first operating position of the seat (8), the first and second manipulators (15, 16) are located on the same lateral side of the seat (8), enabling unimpeded accessibility to the seat (8) from the other lateral side.

8. A machine according to any of the preceding claims, **characterized in that**, upon rotating the seat (8) inbetween its first and second operating positions, the seat is moved over an arc of substantially 180°, whereby the front end of the seat (8) does not move along said second manipulator (16).

## Patentansprüche

1. Erdbewegungsmaschine mit einer Längsachse (3), und mit:
- einem Fahrersitz (8) für einen Fahrer;
- Halterungseinrichtungen (6, 12) für den Sitz (8);
- zwei Ladeeinrichtungen (9, 10), die auf entgegengesetzten Seiten des Sitzes (8) entlang der Längsachse (3) angeordnet sind;
- einer erste Handhabungseinrichtung (15), die es dem Fahrer ermöglicht, die erste (9) der Ladeeinrichtungen (9, 10) zu aktivieren; und
- eine zweite Handhabungseinrichtung (16), die es in Kombination mit der ersten Handhabungseinrichtung (15) dem Fahrer ermöglicht, die zweite (10) der Ladeeinrichtungen (9, 10) zu aktivieren, wobei der Sitz (8) schwenkbar mit der Halterungseinrichtung (6, 12) gekoppelt ist, so dass er sich zwischen einer ersten Betriebsstellung, in der der Fahrer die erste Ladeeinrichtung (9) aktivieren kann, und einer zweiten Betriebsstellung drehen kann, in der der Fahrer die zweite Ladevorrichtung (10) aktivieren kann; und
**dadurch gekennzeichnet, dass** die erste Handhabungseinrichtung (15) mit dem Sitz (8) verbunden ist, und dass die zweite Handhabungseinrichtung (16) auf der Halterungseinrichtung (6, 12) befestigt ist.

2. Maschine nach Anspruch 1, **dadurch gekennzeichnet, dass**, wenn sich der Sitz (8) in der zweiten Betriebsstellung befindet, die ersten und zweiten Handhabungseinrichtungen (15, 16) auf gegenüberliegenden Seiten des Sitzes (8) in einer Richtung (17) allgemein quer zu der Längsachse (3) angeordnet sind.

3. Maschine nach Anspruch 1 oder 2, **dadurch gekennzeichnet, dass** die Halterungseinrichtungen (6, 12) ein Bodenelement (6) und ein Halterungselement (12) für den Sitz (8) umfassen, das auf dem Bodenelement (6) installiert ist, wobei die zweite Handhabungseinrichtung (16) an dem Bodenelement (6) angebracht ist.

4. Maschine nach Anspruch 1 oder 2, **dadurch gekennzeichnet, dass** die Halterungseinrichtungen (6, 12) ein Bodenelement (6) und ein Halterungselement (12) für den Sitz (8) umfassen, das auf dem Bodenelement (6) installiert ist, und dass die zweite Handhabungseinrichtung (16) an dem Halterungselement (12) angebracht ist.

5. Maschine nach einem der vorhergehenden Ansprüche, **dadurch gekennzeichnet, dass** die ersten und zweiten Handhabungseinrichtungen (15, 16) elektronische Handhabungseinrichtungen sind.

6. Maschine nach einem der vorhergehenden Ansprüche, **dadurch gekennzeichnet, dass** die ersten und zweiten Handhabungseinrichtungen (15, 16) hydraulische Handhabungseinrichtungen sind.

7. Maschine nach einem der vorhergehenden Ansprüche, **dadurch gekennzeichnet, dass** in der ersten Betriebsstellung des Sitzes (8) die ersten und zweiten Handhabungseinrichtungen (15, 16) auf derselben lateralen Seite des Sitzes (8) angeordnet sind und eine unbehinderte Zugänglichkeit an den Sitz (8) von der anderen lateralen Seite aus ermöglichen.

8. Maschine nach einem der vorhergehenden Ansprüche, **dadurch gekennzeichnet, dass** bei einer Drehung des Sitzes (8) zwischen seinen ersten und zweiten Betriebsstellungen der Sitz über einen Bogen von im Wesentlichen 180° bewegt wird, wobei sich das vordere Ende (8) des Sitzes nicht entlang der zweiten Handhabungseinrichtung (16) bewegt.

## Revendications

1. Machine de terrassement possédant un axe longitudinal (3) et comprenant :
- un siège de conduite (8) pour un opérateur;
- des moyens de support (6, 12) pour ledit siège (8);
- deux dispositifs de chargement (9, 10) positionnés de part et d'autre dudit siège (8), le long dudit axe longitudinal (3);
- un premier manipulateur (15) permettant à l'opérateur d'activer le premier (9) desdits dispositifs de chargement (9, 10) ; et
- un deuxième manipulateur (16) qui, combiné au premier manipulateur (15), permet à l'opérateur d'activer le second (10) dispositif desdits dispositifs de chargement (9, 10); ledit siège (8) étant raccordé rotativement auxdits moyens de support (6, 12) de manière à pouvoir pivoter entre une première position de fonctionnement, dans laquelle l'opérateur peut activer ledit premier dispositif de chargement (9), et une deuxième position de fonctionnement dans laquelle l'opérateur peut activer ledit second dispositif de chargement (10) ; et
**caractérisée en ce que** ledit premier manipulateur (15) est raccordé audit siège (8) et que ledit second manipulateur (16) est monté sur lesdits moyens de support (6, 12).

2. Machine selon la revendication 1, **caractérisée en ce que**, lorsque ledit siège (8) se trouve dans ladite seconde position de fonctionnement, lesdits premier et second manipulateurs (15, 16) sont positionnés de part et d'autre du siège (8), dans une direction (17) substantiellement transversale audit axe longitudinal (3).

3. Machine selon la revendication 1 ou 2, **caractérisée en ce que** lesdits moyens de support (6, 12) comprennent un élément de plancher (6) et un élément de support (12) pour ledit siège (8) installé sur l'élément de plancher (6), ledit second manipulateur (16) étant fixé audit élément de plancher (6).

4. Machine selon la revendication 1 ou 2, **caractérisée en ce que** lesdits moyens de support (6, 12) comprennent un élément de plancher (6) et un élément de support (12) pour ledit siège (8) installé sur ledit élément de plancher (6), ledit second manipulateur (16) étant fixé audit élément de support (12).

5. Machine selon l'une quelconque des revendications précédentes, **caractérisée en ce que** lesdits premier et second manipulateurs (15, 16) sont des manipulateurs électroniques.

6. Machine selon l'une quelconque des revendications précédentes, **caractérisée en ce que** lesdits premier et second manipulateurs (15, 16) sont des manipulateurs hydrauliques.

7. Machine selon l'une quelconque des revendications précédentes, **caractérisée en ce que**, dans la première position de fonctionnement du siège (8), les premier et second manipulateurs (15, 16) sont situés du même côté latéral du siège (8), permettant d'accéder sans encombre au siège (8) au départ de l'autre côté latéral.

8. Machine selon l'une quelconque des revendications précédentes, **caractérisée en ce que**, lors de la rotation du siège (8) entre ses première et seconde positions de fonctionnement, le siège est déplacé sur un arc de substantiellement 180°, de telle sorte que l'avant du siège (8) ne se déplace pas le long dudit second manipulateur (16).
